# FASCICULE DE BREVET EUROPEEN

(11) **EP 2 233 624 B1**
(45) Date de publication et mention de la délivrance du brevet: **04.01.2012**
(21) Numéro de dépôt: 10305290.8
(22) Date de dépôt: 23.03.2010
(51) Int. Cl.: D04H 1/45, D04H 1/74, D04H 13/00, B29C 70/16

(54) **Renfort textile pour materiau composite et procede de fabrication d'un tel renfort**
Verstärktes Textilmaterial für Verbundmaterial und Verfahren zur Herstellung
Reinforcing textil for composite material and method for producing the same

(30) Priorité: 24.03.2009 FR 0951884
(43) Date de publication de la demande: 29.09.2010
(73) Titulaire: Chomarat Textiles Industries, 07160 Le Cheylard (FR)
(72) Inventeur: ROURE, Thomas, 07160, LE CHEYLARD (FR); MAUPETIT, Jérôme, 07360, DUNIERE SUR EYRIEUX (FR); SANIAL, Philippe, 07240, VERNOUX EN VIVARAIS (FR)
(74) Mandataire: Palix, Stéphane

(56) Documents cités:
- EP-A- 0 949 058
- EP-A- 1 145 841
- EP-A- 1 365 055
- WO-A-2004/078443
- FR-A- 2 898 140

## Description

### DOMAINE TECHNIQUE

La présente invention se rapporte au domaine des matériaux composites à matrice de polymère et, plus spécialement, au domaine des renforts textiles qui entrent dans la constitution de tels matériaux composites après avoir été noyés dans une matrice de polymère.

Plus précisément, l'invention concerne un renfort textile de renforcement d'une matrice de polymère de matériau composite, ainsi qu'un procédé de fabrication d'un tel renfort.

### TECHNIQUES ANTERIEURES

De manière classique, un matériau composite comprend une matrice mécanisante qui est faite de matière plastique moulable et dans laquelle sont noyés un ou plusieurs renforts. Bien souvent, un tel renfort comporte une structure faite de fibres de renforcement artificielles, tels que des fibres de verre, des fibres de carbone ou des fibres d'aramide.

Comme le montre le brevet français FR-1 204 132 qui fut déposé le 9 octobre 1958 et où il est proposé un traitement pour des fibres naturelles destinées à renforcer une matière plastique, employer des fibres naturelles dans la constitution de renforts ou armatures pour matériaux composites est une idée ancienne. Malgré son ancienneté, cette idée n'a pas été réellement exploitée de manière industrielle et, de nos jours, les fibres des renforts pour matériaux composites sont exclusivement ou presque exclusivement des fibres artificielles. Cela s'explique certainement par le fait que la mise en oeuvre de fibres naturelles comme fibres de renforcement pose des difficultés particulières, auxquelles il n'a toujours pas été trouvé de solution économiquement satisfaisante.

Dans la demande de brevet français FR-2 898 140, il est proposé de mêler des fibres naturelles de lin à un autre matériau, à l'aide d'un jeu de peignes entraînés successivement, afin que ces fibres naturelles de lin puissent renforcer des pièces composites. Ce qu'on mêle aux fibres naturelles de lin peut notamment présenter la forme de fils faits de polypropylène ou d'une autre matière plastique. Du fait de leurs natures différentes, les fibres naturelles de lin et les fils de polypropylène ne présentent pas le même comportement en traction, si bien que leur mêlage au moyen de peignes ne peut pas conduire à un produit convenablement homogène.

### RESUME DE L'INVENTION

L'invention a au moins pour but de permettre la fabrication de matériaux composites à partir de renforts à base de fibres naturelles de lin.

Selon l'invention, ce but est atteint grâce à un renfort textile de renforcement d'une matrice de polymère de matériau composite. Ce renfort comporte au moins une nappe non tissée constituée de fibres de lin dont la pluparts et, de préférence, sensiblement la totalité s'étendent individuellement, parallèlement à une même direction perpendiculaire à une largeur de cette nappe, lorsque ladite nappe est à plat. Les fibres de la nappe sont avantageusement des fibres de lin longues.

On a trouvé que, lorsqu'une nappe non tissée est constituée de fibres de lin de la manière définie ci-dessus, cette nappe confère un renforcement mécanique performant au sein d'un matériau composite, après avoir été introduite dans la matrice de ce matériau composite par exemple lors de son moulage (au contact puis presse à chaud, en infusion, ou autres ...).. Par « fibres » de lin, on entend les faisceaux de fibres élémentaires que l'on obtient après traitement des tiges végétales. En effet, le lin se récolte sous la forme de tiges d'une longueur de l'ordre du mètre. Après rouissage, il est possible de désagréger la tige pour obtenir une pluralité de faisceaux de fibres élémentaires, qui sont traités classiquement (teillage, peignage) puis spécifiquement conformément à l'invention. On notera que chaque fibre élémentaire présente une longueur de l'ordre de 50 millimètres en moyenne. Une fibre élémentaire est elle-même constituée d'une pluralité de fibrilles de cellulose qui sont organisées en hélice selon un angle dit angle « microfibrillaire » qui confère des propriétés de résistance mécanique d'autant plus importantes que cet angle est faible. On a constaté avec intérêt que le lin présente des propriétés mécaniques appropriées à la réalisation de renforts, dans la mesure où il combine favorablement plusieurs facteurs positifs. En effet, en combinant les paramètres chimiques tels que le pourcentage de cellulose contenu dans les fibres élémentaires, avec des paramètres géométriques tels que l'angle microfibrillaire, le diamètre des fibres élémentaires, leur longueur et le rapport longueur sur diamètre, ainsi que des paramètres physiques tels que le module d'Young en traction, l'allongement en rupture en traction, et la contrainte en rupture en traction, on a mis en évidence que le lin présente des avantages majeurs par rapport à d'autres fibres naturelles que sont par exemple le jute ou le chanvre. Sur certains points, le lin peut être considéré comme analogue au verre, largement utilisé pour la fabrication de renforts textiles. De plus, le procédé de récolte du lin permet d'obtenir des fibres de qualité beaucoup plus homogène que pour ces autres fibres naturelles.

On a également trouvé qu'on pouvait aisément obtenir une imprégnation très satisfaisante de la nappe du renfort selon l'invention, par un polymère thermoplastique ou thermodurcissable.

On a encore trouvé que la nappe définie précédemment pouvait être produite industriellement. En effet, on a trouvé comment produire industriellement une telle nappe, ce qui sera exposé plus loin.

Lorsqu'elles sont structurées dans un produit pouvant être manipulé et adjoint à un autre matériau, les fibres naturelles de lin le sont généralement sous forme de fils. Dans de tels fils, elles sont filées et retordues ensemble, de manière à former un produit cohérent et à même de résister à diverses manipulations et opérations comme celles que comporte le tissage.

Des fils de fibres de lin ne possèdent aucunement les qualités de la nappe du renfort selon l'invention. En particulier, de tels fils s'imprègnent difficilement et mal. Leur section importante s'oppose à une imprégnation à coeur, outre qu'elle ne permet pas au composite final d'avoir un taux de fibres optimal avec une épaisseur du stratifié minimale.

De plus, une fois noyés dans une matrice, des fils de fibres de lin ne renforcent que peu cette matrice. Il est possible que, lorsque le matériau composite est sollicité en traction selon la direction longitudinale des fils, les fibres individuelles de lin de ces fils ne prennent en charge qu'une partie de la sollicitation en traction parce que, étant torsadées, elles ne sont pas tendues dans cette direction. En outre, une telle sollicitation en traction tend à resserrer les fibres individuelles des fils les unes contre les autres et à faire que ces fibres se cisaillement mutuellement.

Dans le renfort selon l'invention, les fibres longues de lin de la nappe possèdent une disposition telle que leurs fonctions en tant que fibres de renforcement dans un renfort pour matériau composite sont particulièrement privilégiées. La nappe de fibres longues de lin du renfort selon l'invention peut présenter une très faible épaisseur, tout en comptant un très grand nombre de fibres telles que dénombrées dans une section transversale selon un plan perpendiculaire aux fibres. Grâce au procédé spécifique de récolte du lin, il est possible de ne conserver qu'une partie des fibres, et plus précisément la fraction des fibres les plus longues. Les fibres courtes, de moindre intérêt pour les applications de renfort, peuvent être éliminées pendant des étapes de préparation, pour conserver des propriétés mécaniques optimales.

Avantageusement, la nappe de fibres de lin est conditionnée en vue de son incorporation dans une matrice de polymère. Le conditionnement de cette nappe peut avantageusement comprendre le fait que les fibres de ladite nappe sont fixées à au moins un support. Pour ce faire, des coutures peuvent avantageusement lier les fibres de ladite nappe audit support.

Avantageusement, le conditionnement de la nappe de fibres de lin comprend le fait que la nappe est enroulée. Lorsque tel est le cas, une feuille intercalaire est avantageusement enroulée avec ladite nappe, de manière à séparer deux spires consécutives de cette nappe l'une de l'autre.

Avantageusement, le conditionnement de la nappe de fibres de lin comprend le fait que la nappe est imprégnée de matière plastique, notamment de polymère thermoplastique.

L'invention a également pour objet un procédé de fabrication d'un renfort textile de renforcement d'une matrice de polymère de matériau composite. Dans ce procédé, on réalise une nappe non tissée constituée de fibres de lin dont la pluparts et, de préférence, sensiblement la totalité s'étendent individuellement, parallèlement à une même direction perpendiculaire à une largeur de cette nappe, lorsque ladite nappe est à plat. Les fibres de la nappe sont avantageusement des fibres de lin dites longues.

Avantageusement, ce procédé comporte une étape de conditionnement dans laquelle on conditionne ladite nappe sans modifier le fait que la pluparts des fibres de lin de cette nappe s'étendent individuellement, parallèlement entre elles.

Avantageusement, dans l'étape de conditionnement, on conditionne ladite nappe sans modifier le fait que sensiblement toutes les fibres de lin de cette nappe s'étendent individuellement, parallèlement entre elles, lorsque tel est le cas.

Avantageusement, dans l'étape de conditionnement, on fixe les fibres de la nappe à un support.

Avantageusement, dans l'étape de conditionnement, on coud les fibres de la nappe audit support.

Avantageusement, dans l'étape de conditionnement, on enroule au moins la nappe.

Avantageusement, dans l'étape de conditionnement, on enroule ensemble au moins la nappe et une feuille intercalaire disposée de manière à séparer deux spires consécutives de cette nappe l'une de l'autre.

Avantageusement, dans l'étape de conditionnement, on imprègne la nappe de matière plastique, notamment de polymère thermoplastique. Avantageusement, de la matière plastique pour l'imprégnation de la nappe est amenée sous forme pulvérulente, au contact de cette nappe. Avantageusement, on procède ensuite à un chauffage qui fait fondre la matière plastique pulvérulente. Avantageusement, on procède à un pressage de la matière plastique et de la nappe ensemble, lorsque la matière plastique est à même de pénétrer dans la nappe grâce à ce pressage, notamment lorsque la matière plastique est à l'état fondu.

Avantageusement, le procédé comporte des étapes dans lesquelles :
a) un jeu de peignes progressant à une première vitesse attrape continuellement des fibres de lin, puis entraîne ces fibres de lin vers un passage entre deux rouleaux d'étirage tournant en sens inverses, puis
b) les deux rouleaux d'étirage saisissent entre eux, continuellement, des fibres de lin amenées par les peignes et entraînent ces fibres de lin à une deuxième vitesse supérieure à ladite première vitesse.

Avantageusement, l'étape de conditionnement s'effectue sur ladite nappe alors que cette nappe est telle que structurée dans les étapes a) et b).

### BREVE DESCRIPTION DES DESSINS

L'invention sera bien comprise à la lecture de la description qui va suivre, donnée uniquement à titre d'exemple et faite en se référant aux dessins annexés, parmi lesquels :
- la figure 1 est une vue schématique, en perspective, d'une portion d'un renfort selon un premier mode de réalisation de l'invention ;
- la figure 2 est une vue très schématique, en perspective, d'une installation où est produit le renfort de la figure 1, selon un procédé conforme à l'invention ;
- la figure 3 est une vue semblable à la figure 2 et illustre comment fabriquer un renfort selon un deuxième mode de réalisation de l'invention ; et ?
- la figure **4** est également une vue analogue à la figure 2 et illustre comment fabriquer un renfort selon un troisième mode de réalisation de l'invention.

### MANIERES POSSIBLES DE REALISER L'INVENTION

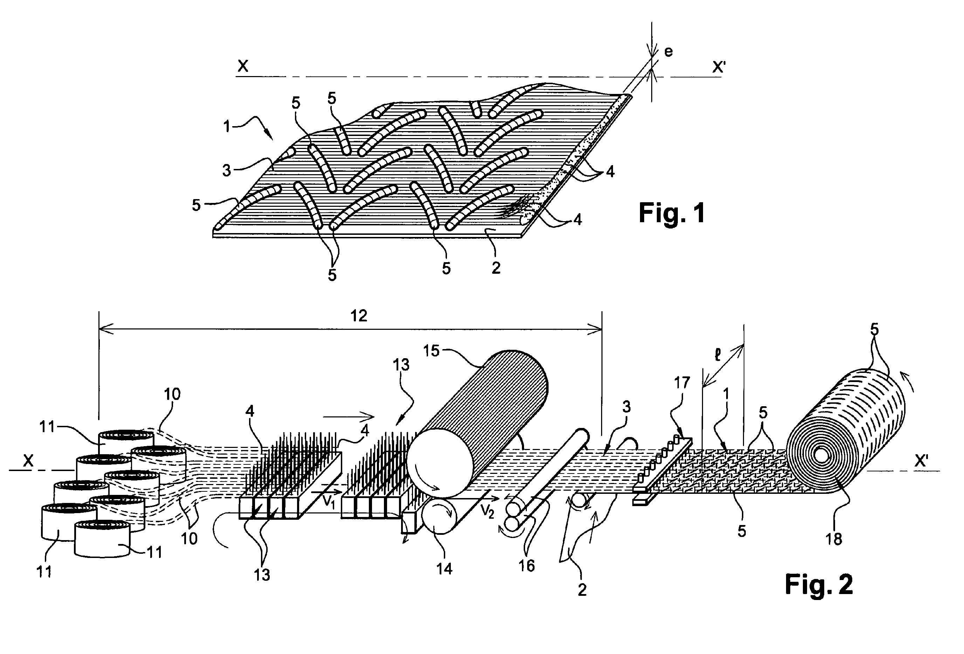

Sur la figure 1 est représenté un renfort textile **1,** qui est prévu pour entrer dans la constitution d'un matériau composite, en étant noyé dans une matrice de polymère de ce matériau de manière à en être imprégné et à le renforcer. Ce renfort **1** comporte un support **2,** contre une face duquel une nappe non tissée **3** de fibres individuelles de lin longues **4** est liée par des coutures **5.**

En portant la nappe **3,** le support **2** participe à la cohérence structurelle du renfort **1** et en facilite ainsi la manipulation. Il présente la forme d'une feuille souple ou flexible, qui est plane lorsque le renfort **1** est à plat comme à la figure 1. Le support 2 peut posséder toute structure et toute constitution appropriées. Par exemple, ce peut être un non tissé, tel qu'un non tissé à base de fibres de polyester et/ou de fibres de verre. Le support **2** peut également être fait de fils tissés ensemble, qui peuvent par exemple être des fils de fibres naturelles, par exemple des fils de lin et/ou des fibres de coton.

Les fibres **4** de la nappe **3** ont toutes la même nature. Il s'agit exclusivement de fibres naturelles de lin longues non mélangées à aucune autre fibre ou aucun autre matériau fibreux ou filamentaire. Bien qu'elles forment ensemble la nappe **3,** sensiblement toutes les fibres de lin **4** de cette nappe sont individualisées et non agglomérées les unes aux autres.

Au sens où on l'entend ici, les mots « sensiblement toutes les fibres de lin **4** de la nappe **3** » ou « sensiblement la totalité des fibres de lin **4** de la nappe **3** » ou « la quasi-totalité des fibres de lin **4** de la nappe **3** » signifient que, dans la nappe **3,** quelques fibres de lin peuvent ne pas être concernées et se différentier des autres.

Sensiblement toutes les fibres de lin **4** de la nappe **3** s'étendent parallèlement à une même direction longitudinale **X-X',** lorsque le renfort **1** est à plat. Cette direction longitudinale **X-X'** est perpendiculaire à la largeur ℓ et à l'épaisseur e de la nappe **3.**

La section transversale de la nappe **3,** c'est-à-dire sa section dans le plan perpendiculaire à la direction longitudinale **X-X',** est aplatie, dans la mesure où les fibres de lin **4** sont réparties de manière régulière et homogène selon la largeur ℓ de la nappe **3.** Plus précisément, le nombre moyen de fibres **4** par unité de largeur de la nappe **3** est sensiblement constant dès lors qu'il est calculé sur des distances de l'ordre d'un centimètre ou plus dans le sens de la largeur ℓ. La nappe **3** est également homogène, en termes de grammage, selon la direction longitudinale des fibres **4.**

Telle qu'elles sont disposées, les coutures **5** ne modifient pas ou que très légèrement l'orientation longitudinale des fibres de lin **4** selon la direction **X-X'.** Dans l'exemple représenté, ces coutures **5** forment un motif de chevrons successifs du côté de la nappe **3.** Elles peuvent être réalisées en tous fils appropriés. Par exemple, les fils des coutures **5** peuvent être faits de polyester. Ils peuvent également être faits de coton ou d'une autre fibre naturelle.

Bien entendu, la nappe **3** peut être fixée au support **2** autrement que par des coutures. Par exemple, la nappe **3** peut être fixée au support **2** par collage. Egalement, des collages localisés peuvent remplacer ou bien compléter les coutures **5.**

La fabrication du renfort **1** est illustrée à la figure 2, où les flèches symbolisent des sens d'entraînement ou des sens de rotation. Les fibres de lin **4** proviennent d'un ensemble de rubans **10** de fibres de lin peignées. Les rubans peignés **10** sont extraits progressivement de pots d'alimentation **11,** qui sont disposés en entrée de l'installation de fabrication du renfort **1** et dans chacun desquels est enroulé un ruban **10.** Chaque ruban **10** est le produit d'une opération que, dans l'industrie textile en général et la préparation à la filature en particulier, il est classique d'employer pour préparer des fibres naturelles au filage proprement dit et qui s'appelle le peignage. Le peignage s'effectue classiquement dans des machines couramment appelées « machines Gills » ou « Gills-Box », dont on trouvera de vieux exemples dans le brevet GB-1896-19890 ou dans le brevet GB-117689.

L'installation de la figure **2** reproduit partiellement une telle machine Gills. Plus précisément, cette installation comporte la portion amont **12** d'une machine Gills de doublage, sans sa portion aval, puisqu'elle est dépourvue de condenseur et de dispositif de mise en pot du ruban en provenance du condenseur.

La partie amont **12** de machine Gills possède un jeu de peignes **13** qui progresse à une première vitesse **V₁,** vers une paire de rouleaux d'étirage **14** et **15.** De manière connue, les peignes **13** sont parallèles entre eux et accouplés à une chaîne sans fin ou analogue, de manière à pouvoir être entraînés selon une boucle, dont seule la portion supérieure est représentée à la figure 2, dans un souci de clarté. Les peignes **13** attrapent continuellement de nouvelles fibres dans les rubans **10,** puis les entraînent vers les rouleaux d'étirage **14** et **15,** en les tirant et en les orientant parallèlement à la direction longitudinale **X-X'** de l'installation de la figure 2.

Les fibres de lin **4** entraînées par les peignes **13** sont dirigées vers un passage aplati que les rouleaux d'étirage **14** et **15** délimitent entre eux. Lorsqu'elles parviennent à ce passage, les fibres de lin **4** sont saisies par les rouleaux **14** et **15,** entre ces rouleaux, qui les entraînent toujours selon la direction longitudinale **X-X'** de l'installation de la figure 2, à une deuxième vitesse **V₂** supérieure à la vitesse **V₁** et qui, ce faisant, effectuent un déboitement des fibres **4** entre elles. Grâce à ce déboitement, les fibres de lin **4** sont rendues parallèles entre elles et elles sont calibrées au sens où leur nombre en section transversale est particulièrement homogène et sensiblement constant dans la largeur et dans la longueur.

De manière connue, la vitesse V₂ peut être supérieure à un multiple entier de la vitesse **V₁.** Par exemple, elle peut être de l'ordre de 10 à 11 fois la vitesse **V₁.** La vitesse **V₂** est plus précisément la vitesse tangentielle au niveau des surfaces cylindriques des rouleaux d'étirage **14** et **15,** qui sont entraînés en sens contraire.

Le rouleau d'étirage **14** peut être un rouleau d'acier et il possède un diamètre externe inférieur au diamètre du rouleau d'étirage **15,** qui peut être fait de bois, notamment de bois exotique tel que du bokanga, ou de caoutchouc ou d'un autre matériau moins dur que l'acier.

En sortie du passage délimité par les rouleaux **14** et **15,** les fibres de lin **4** forment ensemble une nappe qui passe entre deux rouleaux de pressage **16.** Cette nappe est serrée entre les deux rouleaux **16,** en aval desquels elle forme la nappe **3.**

La nappe **3** est conditionnée directement après les rouleaux de pressage **16,** alors qu'elle est très homogène. A cet effet, en amont d'une machine de couture **17,** une bande destinée à former le support **2** rejoint la nappe **3.** Le support **2** et la nappe 3 passent ensemble dans la machine **17,** qui est connue en soit et qui réalise la couture **5** sous forme de plusieurs rangées de points de couture de type Malimo. En aval de la machine de couture **17,** le renfort **1** est achevé et il est enroulé en une bobine **18.**

Sur la figure **2****,** l'installation est représentée très schématiquement et, par exemple, plusieurs dispositifs de guidage sont omis dans un souci de clarté, dans la mesure où le sous-ensemble allant des peignes **12** aux rouleaux de pressage **16** est bien connu en soi puisqu'il est configuré comme la partie amont d'une machine Gills.

Les paramètres de réglage du fonctionnement de l'installation représentée à la figure **2** sont choisis en fonction de ce que l'on veut que la nappe **3** possède comme caractéristiques, notamment en termes de nombre de fibres par unité de largeur de renfort. A cet égard, le débit de fibres traitées par les peignes **13** possède un seuil maximal au-delà duquel on constate un fonctionnement défectueux. Aussi, il est possible de former une nappe **3** plus épaisse en superposant et en réunissant ainsi plusieurs nappes prélevées en sortie des rouleaux de pressage **16,** avant la machine de couture **17.** La réunion de plusieurs nappes de fibres peut, par exemple, être suivie de la couture sur le support **2.**

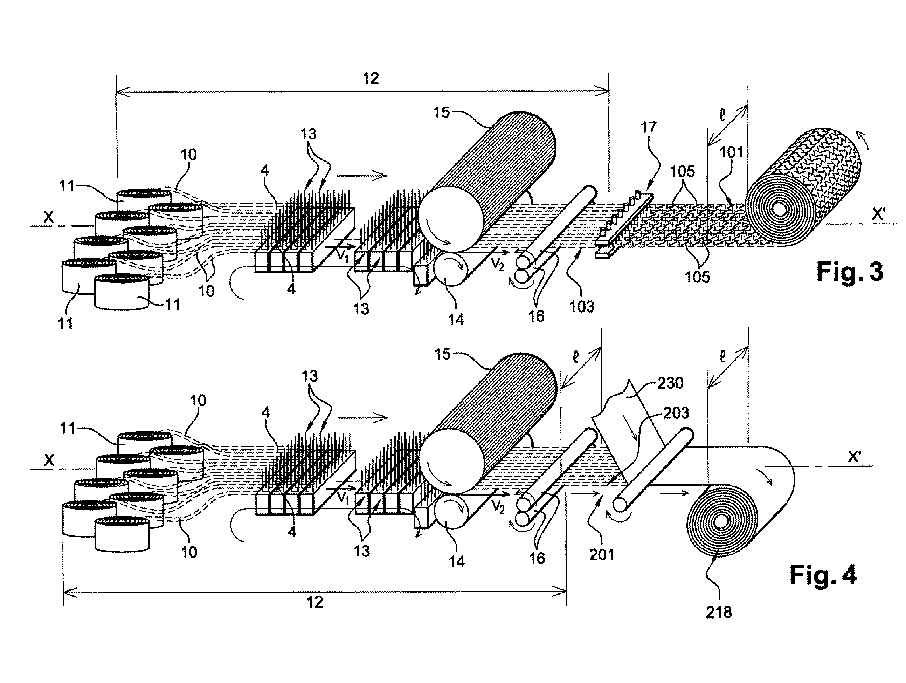

La figure 3 illustre la fabrication d'un renfort **101** selon un deuxième mode de réalisation de l'invention. Le renfort **101** est identique au renfort **1,** sauf en ce qu'il est dépourvu de support **2.** Le renfort **101** comporte donc une nappe de fibres **103** qui est analogue ou identique à la nappe **3** et à la cohésion de laquelle participent des coutures **105** analogues aux coutures **5.**

Pour peu que le dispositif d'amenée du support **2** ait été ôté ou rendu inopérant, le renfort **101** peut être fabriqué sur la même installation que le renfort **1,** ce qui est le cas à la figure 3 où les références désignant des parties de cette installation sont les mêmes que celles employées à la figure 2.

La figure 4 illustre la fabrication d'un renfort **201** selon un troisième mode de réalisation de l'invention. Ce renfort **201** comporte une nappe **203,** qui est analogue ou identique à la nappe **3,** sauf en ce qu'elle n'est pas portée par un support **2** et en ce qu'il n'y s'y trouve aucune couture **5.** Une feuille intercalaire **230** en ruban est apposée sur une face de la nappe **203** avant que l'ensemble ainsi formé soit enroulé en une bobine **218,** dans laquelle la feuille intercalaire **230** sépare les spires consécutives de la nappe **203.**

Le renfort **201** peut être fabriqué dans une installation qui possède la même partie amont jusqu'aux rouleaux de pressage **16,** que l'installation de la figure 2. Tel est le cas à la figure 4, sur laquelle on a désigné les parties ou éléments de l'installation de fabrication en utilisant les mêmes références qu'à la figure 2.

L'installation de la figure 4 peut être complétée de manière que la nappe **203** non cousue soit imprégnée de matière plastique en sortie de ligne. Dans un mode de réalisation où tel est le cas, un dispositif de saupoudrage est disposé en aval des rouleaux de pressage **16.** Il est suivi d'un dispositif de chauffage, en sortie duquel sont prévus deux rouleaux de calibrage.

La matière plastique dont on imprègne la nappe **203** non cousue peut être un polymère thermoplastique, par exemple un polyamide tel que le polyamide 11. Lorsqu'elle amenée au contact de la nappe **203,** cette matière plastique est sous forme d'une poudre. Elle est déposée sur la nappe **203** en étant saupoudrée par le dispositif de saupoudrage, qui est conçu pour effectuer une répartition à la fois homogène dans la largeur de la nappe **203** et constante selon sa longueur. Il peut être prévu de soumettre la nappe à des vibrations, ou bien à un ou plusieurs chocs, ou encore à un autre phénomène tendant à faire pénétrer la poudre de matière plastique dans la nappe **203.**

Le dispositif de chauffage comprend plusieurs tapis sans fin qui sont chauffés. Lorsqu'elle passe entre ces tapis, la nappe **203** porte la matière plastique pulvérulente, que fait fondre l'apport de chaleur. De ce fait, cette matière plastique est liquide lorsque la nappe **203** parvient aux rouleaux de calibrage, qui sont des rouleaux de pressage.

Entre les rouleaux de calibrage, la nappe et la matière plastique à l'état liquide sont pressées ensemble. Le pressage effectué par les rouleaux de calibrage fait pénétrer la matière plastique à l'état fondu dans la nappe, tout en assurant une répartition homogène de cette matière plastique et un calibrage de l'épaisseur du renfort imprégné. En aval des rouleaux de calibrage, un refroidissement est effectué, puis la feuille intercalaire **230** est rapportée avant que le renfort imprégné soit mis en bobine par enroulage.

A la figure 2 et à la figure 3, la fabrication des renforts **1** et **101** est continue et il n'y a pas d'interruption avant l'opération de couture. Bien entendu, il peut en être autrement et la nappe **3** ou **103** peut être enroulée sur une bobine, par exemple comme à la figure 4, avant qu'ait lieu l'opération de couture. Lorsque tel est le cas, l'opération de couture s'effectue sur une autre ligne, en entrée de laquelle est déroulée la nappe de fibres de lin mise en bobine précédemment.

### Exemple

Un renfort **1** est réalisé à partir de douze pots **11** de rubans **10** de fibres longues de lin peignées. Le titre moyen de chaque ruban est de 35 g/m, en variant sur une plage allant de 25 g/m à 35 g/m.

Les douze rubans **10** sont employés pour alimenter une machine Gills non modifiée, lors d'une opération de doublage classique. Lors de cette opération de doublage, l'étirage, c'est-à-dire le rapport de la vitesse analogue à la vitesse **V₂** sur la vitesse analogue à la vitesse **V₁,** est réglé à 12. Le nouveau ruban de fibres de lin peignées **10** produit lors de l'opération de doublage possède un titre moyen de 35 g/m, en variant dans une plage allant de 31 g/m à 36 g/m. Ce ruban peigné **10,** doublé une fois, est réparti dans douze pots **11.**

Ces douze pots **11** sont employés pour fabriquer une nappe **3** sur une installation identique à celle de la figure 4 et présentant une largeur de 15 cm. Sur cette installation, l'étirage, c'est-à-dire le rapport **V₂/ V₁,** est réglé à 5,6. Comme sur la figure 4, la nappe **3** est enroulée avec une feuille intercalaire. D'une largeur de 15 cm, cette nappe **3** possède un grammage de l'ordre de 500 g/m² et un titre moyen de l'ordre de 75 g/m et variant entre 73 g/m et 77 g/m. Vingt-quatre exemplaires de cette nappe **3** sont produits.

Afin de réaliser un renfort **1** plus large, ces vingt quatre-exemplaires alimentent une installation qui est semblable à celle de la figure 4 et qui possède une largeur de 40 cm. En entrée de l'installation, les vingt quatre nappes se présentent sous la forme de bobines mises en quinconce sur un cantre. L'étirage est réglé à une valeur de l'ordre de 12. En sortie de l'installation, une nappe **3** large de 40 cm est enroulée avec une feuille intercalaire. Son titre a une valeur moyenne de 150 g/m, en variant entre 146 g/m et 154 g/m.

Le passage dans l'installation de 40 cm de large n'est pas obligatoire et elle sert à produire une nappe **3** dans une largeur de 40 cm, à partir de nappes larges de 13,5 cm.

La nappe dans la bobine de 40 cm de largeur ou dans l'une des bobines de 15 cm de largeur peut être cousue sur un support **2,** lors d'une opération ultérieure, afin que soit obtenu le renfort **1.**

L'invention ne se limite pas aux modes de réalisation décrits précédemment. En particulier, les installations des figures 2, 3 et 4 peuvent être alimentées par des nappes **203** en bobines, et non par des rubans de fibres de lin peignées **10** mis en pot **11.**

En outre, dans la nappe **3,** seulement la pluparts des fibres de lin **4,** c'est-à-dire la majorité d'entre elles, peuvent être individualisées et non agglomérées les unes aux autres. De plus, dans la nappe **3,** seulement la pluparts des fibres de lin **4,** c'est-à-dire la majorité d'entre elles, peuvent s'étendent parallèlement à une même direction longitudinale **X-X',** lorsque le renfort **1** est à plat.

Par ailleurs, un renfort selon l'invention peut comporter plusieurs nappes **3, 103** ou **203** décalées angulairement entre elles, de manière à se croiser.

## Revendications

1. Renfort textile de renforcement d'une matrice de polymère de matériau composite, ***caractérisé* en ce qu'**il comporte au moins une nappe non tissée (3) constituée de fibres de lin (4) dont la pluparts s'étendent individuellement, parallèlement à une même direction (X-X') perpendiculaire à une largeur (ℓ) de cette nappe (3), lorsque ladite nappe (3) est à plat.

2. Renfort textile selon la revendication 1, ***caractérisé* en ce que** sensiblement toutes les fibres de lin (4) de ladite nappe (3) s'étendent individuellement, parallèlement à une même direction (X-X') perpendiculaire à une largeur (ℓ) de cette nappe (3), lorsque ladite nappe (3) est à plat.

3. Renfort textile selon l'une quelconque des revendications 1 et 2, ***caractérisé* en ce que** ladite nappe est conditionnée en vue de son incorporation dans une matrice de polymère.

4. Renfort textile selon l'une quelconque des revendications précédentes, ***caractérisé* en ce que** les fibres (4) de ladite nappe (3) sont fixées à au moins un support (2).

5. Renfort textile selon la revendication 4, ***caractérisé* en ce que** des coutures (5) lient les fibres (4) de ladite nappe (3) audit support (2).

6. Renfort textile selon l'une quelconque des revendications précédentes, ***caractérisé* en ce que** ladite nappe au moins est enroulée.

7. Renfort textile selon la revendication 6, ***caractérisé* en ce qu'**une feuille intercalaire (230) est enroulée avec ladite nappe (3), de manière à séparer deux spires consécutives de cette nappe l'une de l'autre.

8. Procédé de fabrication d'un renfort textile (1) de renforcement d'une matrice de polymère de matériau composite, ***caractérisé* en ce que**, dans ce procédé, on réalise une nappe non tissée (3) constituée de fibres de lin (4) dont la pluparts s'étendent individuellement, parallèlement à une même direction (X-X') perpendiculaire à une largeur(ℓ) de cette nappe (3), lorsque ladite nappe (3) est à plat.

9. Procédé de fabrication selon la revendication 8, ***caractérisé* en ce que** sensiblement toutes les fibres de lin (4) de ladite nappe (3) s'étendent individuellement, parallèlement à une même direction (X-X') perpendiculaire à une largeur (ℓ) de cette nappe (3), lorsque ladite nappe (3) est à plat.

10. Procédé de fabrication selon l'une quelconque des revendications 8 et 9, ***caractérisé* en ce qu'**il comporte une étape dans laquelle :
c) on conditionne ladite nappe (3) sans modifier le fait que la pluparts des fibres de lin (4) de cette nappe (3) s'étendent individuellement, parallèlement entre elles.

11. Procédé de fabrication selon la revendication 10, ***caractérisé* en ce que**, dans l'étape c), on fixe les fibres (4) de ladite nappe (3) à un support (2).

12. Procédé de fabrication selon la revendication 11, ***caractérisé* en ce que**, dans l'étape c), on coud les fibres (4) de ladite nappe (3) audit support (2).

13. Procédé de fabrication selon l'une quelconque des revendications 10 à 12, ***caractérisé* en ce que**, dans l'étape c), on enroule au moins ladite nappe (3).

14. Procédé de fabrication selon la revendication 13, ***caractérisé* en ce que**, dans l'étape c), on enroule ensemble au moins ladite nappe (3) et une feuille intercalaire (230) disposée de manière à séparer deux spires consécutives de cette nappe (3) l'une de l'autre.

15. Procédé de fabrication selon l'une quelconque des revendications 8 à 14, ***caractérisé* en ce qu'**il comporte des étapes dans lesquelles :
a) un jeu de peignes (13) progressant à une première vitesse (V₁) attrape continuellement des fibres de lin (4), puis entraîne ces fibres de lin (4) vers un passage entre deux rouleaux d'étirage (14,15) tournant en sens inverses, puis ;
b) les deux rouleaux d'étirage (14,15) saisissent entre eux, continuellement, des fibres de lin amenées par les peignes (13) et entraînent ces fibres de lin (4) à une deuxième vitesse (V₂) supérieure à ladite première vitesse (V₁).

## Claims

1. Textile reinforcement to reinforce a polymer matrix of composite material, ***characterised* in that** it comprises at least one non-woven sheet (3) of flax fibres (4) most of which extend individually, in parallel in the same direction (X-X') perpendicular to a width (ℓ) of this sheet (3), when the said sheet (3) is flat.

2. Textile reinforcement according to claim 1, ***characterised* in that** substantially all of the flax fibres (4) of the said sheet (3) extend individually, in parallel in the same direction (X-X') perpendicular to a width (ℓ) of this sheet (3), when the said sheet (3) is flat.

3. Textile reinforcement according to either of claims 1 and 2, ***characterised* in that** the said sheet is conditioned with a view to its incorporation into a polymer matrix.

4. Textile reinforcement according to any of the preceding claims, **characterised in that** the fibres (4) of the said sheet (3) are fixed to at least one support (2).

5. Textile reinforcement according to claim 4, **characterised in that** the stitches (5) connect the fibres (4) of the said sheet (3) to the said support (2).

6. Textile reinforcement according to any of the preceding claims, ***characterised* in that** the said sheet at least is wound.

7. Textile reinforcement according to claim 6, ***characterised* in that** an intermediate layer (230) is wound up with the said sheet (3), so as to separate two consecutive windings of this sheet from each other.

8. Method of producing a textile reinforcement (1) to reinforce a polymer matrix of composite material, ***characterised* in that**, in this method, a non-woven sheet (3) of flax fibres (4) most of which extend individually, in parallel in the same direction (X-X') perpendicular to a width (ℓ) of this sheet (3), when the said sheet (3) is flat

9. Method of production according to claim 8, ***characterised* in that** substantially all of the flax fibres (4) of the said sheet (3) extend individually, in parallel in the same direction (X-X') perpendicular to a width (ℓ) of this sheet (3), when the said sheet (3) is flat

10. Method of production according to either of chimps 8 and 9, ***characterised* in that** it comprises a stage in which:
c) the said sheet (3) is conditioner without altering the fact that most of the flax fibres (4) of this sheet (3) extend individually, parallel to each other.

11. Method of production according to claim 10, ***characterised* in that**, in stage c), the fibres (4) of the said sheet (3) are fixed to a support (2).

12. method of production according to claim 11, ***characterised* in that**, in stage c), the fibres (4) of the said sheet (3) are stitched onto the said support (2).

13. method of production according to any of claims 10 to 12, ***characterised* in that** in stage c), at least the said sheet (3) is wound.

14. Method of production according to claim 13, ***characterised* in that**, in stage c), at least the said sheet (3) and an intermediate layer (230), arranged so as to separate two consecutive windings of this sheet (3) from each other, are wound together.

15. Method of production according to any of claims 8 to 14, ***characterised* in that** it comprises stages in which:
a) a set of combs (13) running at a first speed (V₁), continually grasp flax fibres (4), then drag these flax fibres (4) towards a passage between two drawing-off rollers (14,15) timing in opposite directions, then
b) the two drawing-off rollers (14, 15) grasp between them, continually, flax fibres introduced by the combs (13) and drag these flax fibres (4) at a second speed (V₂), greater than the said first speed (V₁).

## Patentansprüche

1. Textile Verstärkung zur Verstärkung einer Verbundstoff-Polymermatrix, **dadurch gekennzeichnet, dass** sie mindestens eine nicht gewebte Matte (3) umfasst, die aus Flachsfasern (4) besteht, von denen sich die meisten einzeln, parallel zu einer gleichen Richtung (X-X') senkrecht zu einer Bereite (ℓ) dieser Matte (3) erstrecken, wenn die Matte (3) flachliegt.

2. Textile Verstärkung nach Anspruch 1, **dadurch gekennzeichnet, dass** sich im Wesentlichen alle Flachsfasern (4) der Matte (3) einzeln, parallel zu einer gleichen Richtung (X-X') senkrecht zu einer Breite (ℓ) dieser Matte (3) erstrecken, wenn die Matte (3) flachliegt.

3. Textile Verstärkung nach einem der Anspruche 1 und 2, **dadurch gekennzeichnet, dass** die Matte im Hinblick auf ihre Einbindung in eine Polymermatrix vorbehandelt wird.

4. Textile Verstärkung nach einem der vorhergehenden Ansprüche, **dadurch gekennzeichnet, dass** die Fasern (4) der Matte (3) an mindestens einem Träger (2) fixiert sind.

5. Textile Verstärkung nach Anspruch 4, **dadurch gekennzeichnet, dass** Nahtverbindungen (5) die Fasern (4) der Matte (3) an den Träger (2) binden.

6. Textile Verstärkung nach einem der vorhergehenden Anspruche, **dadurch gekennzeichnet, dass** die Matte zumindest aufgerollt ist.

7. Textile Verstärkung nach Anspruch 6, **dadurch gekennzeichnet, dass** ein Einlagebogen (230) mit der Matte (3) aufgerollt ist, um zwei aufeinanderfolgende Windungen dieser Matte voreinander zu trennen.

8. Verfahren zur Herstellung einer textilen Verstärkung (1) zur Verstärkung einer Verbundmaterial-Polymermatrix, **dadurch gekennzeichnet, dass** in dem Verfahren eine nicht gewebte Matte (3) hergestellt wird, die aus Flachsfasern (4) besteht, von denen sich die meisten einzeln, parallel zu einer gleichen Richtung (X-X') senkrecht zu einer Breite (ℓ) dieser Matte (3) erstrecken, wenn die Matte (3) flachliegt.

9. Herstellungsverfahren nach Anspruch 8, **dadurch gekennzeichnet, dass** sich im Wesentlichen alle Flachsfasern (4) der Matte (3) einzeln, parallel zu einer gleichen Richtung (X-X') senkrecht zu einer Breite (ℓ) dieser Matte (3) erstrecken, wenn die Matte (3) flachliegt.

10. Herstellungsverfahren nach einem der Ansprüche 8 und 9, **dadurch gekennzeichnet, dass** es einen Schritt umfasst, in dem:
c) die Matte (3) vorbehandelt wird, ohne die Tatsache zu verändern, dass die meisten Hachsfasern (4) dieser Matte (3) sich einzeln parallel zueinander erstrecken.

11. Herstellungsverfahren nach Anspruch 10, **dadurch gekennzeichnet, dass** im Schritt c) die Fasern (4) dieser Matte (3) an einem Träger (2) fixiert werden.

12. Herstellungsverfahren nach Anspruch 11, **dadurch gekennzeichnet, dass** im Schritt c) die Fasern (4) der Matte (3) am Träger (2) angenäht werden,

13. Herstellungsverfahren nach einem der Ansprüche 10 bis 12, **dadurch gekennzeichnet, dass** im Schritt c) die Matte (3) zumindest aufgerollt wird.

14. Herstellungsverfahren nach Anspruch 13, **dadurch gekennzeichnet, dass** im Schritt c) zumindest die Matte (3) und ein Einlagebogen (230) zusammen aufgerollt werden, der vorgesehen ist, um zwei aufeinanderfolgende Windungen dieser Matte (3) voreinander zu trennen.

15. Herstellungsverfahren nach einem der Ansprüche 8 bis 14, **dadurch gekennzeichnet, dass** es Schritte umfasst, in denen:
a) ein Satz von Kämmen (13), die mit einer ersten Geschwindigkeit (V₁) vorrücken, die Flachsfasern (4) kontinuierlich einfängt, dann die Flachsfasern (4) zu einem Durchgang zwischen zwei Streckwalzen (14, 15) mitnimmt, die sich in entgegengesetzten Richtungen drehen, dann
b) die beiden Streckwalzen (14, 15) zwischen sich die von den Kämmen (13) zugeführten Flachsfasern kontinuierlich erfassen und diese Flachsfasern (4) mit einer zweiten Geschwindigkeit (V₂) mitnehmend die höher ist als die erste Geschwindigkeit (V₁).
